# EUROPÄISCHE PATENTANMELDUNG

(11) **EP 1 630 054 A1**
(43) Veröffentlichungstag der Anmeldung: **01.03.2006**
(21) Anmeldenummer: 04019153.8
(22) Anmeldetag: 12.08.2004
(51) Int. Cl.: B60W 10/02, B60W 10/04, F16D 43/00, B60T 7/12

(54) **Verfahren zur Implementierung einer elektrischen Rückroll Sperre für Kraftfahrzeug-Antriebssysteme**

(71) Anmelder: BorgWarner Inc., Auburn Hills MI 48326 (US)
(72) Erfinder: Gröpper, Tobias, 69117 Heidelberg (DE); Wirch, Artur, 67346 Speyer (DE)
(74) Vertreter: Patentanwälte Westphal, Mussgnug & Partner

(57) **Zusammenfassung**

Die Erfindung betrifft softwareimplementiertes Verfahren zur Realisierung einer elektronischen Rollsperre für Kraftfahrzeuge mit automatischer oder automatisierter Kupplung.

Aufgabe der Erfindung ist es, ein softwareimplementiertes Verfahren zur Realisierung einer elektronischen Rollsperre vorzuschlagen, mit der ein Rollen des Fahrzeugs in beide Fahrtrichtungen abgefangen werden kann.

Diese Aufgabe wird dadurch gelöst, dass die vorgegebene Fahrtrichtung festgestellt wird, kontinuierlich, oder diskontinuierlich in diskreten Zeitabständen, überwacht wird, ob das Fahrzeug rollt, für den Fall, dass das Fahrzeug rollt, die tatsächliche Rollrichtung festgestellt wird,die tatsächliche Rollrichtung mit der vorgegebenen Fahrtrichtung verglichen wird, falls die tatsächliche Rollrichtung nicht der vorgegebenen Fahrtrichtung entspricht, die Hangabtriebskraft errechnet wird, das notwendige Haltedrehmoment in Abhängigkeit der Hangabtriebskraft errechnet wird, an der Kupplung das zu übertragende Haltedrehmoment eingestellt wird.

## Beschreibung

Die Erfindung betrifft ein softwareimplementiertes Verfahren zur Realisierung einer elektronischen Rollsperre für Kraftfahrzeuge mit einer automatischen oder eine automatisierten Kupplung.

Insbesondere beim Anfahren mit Kraftwagen an Steigungen besteht das Problem, dass sobald der Fahrer das Bremspedal löst, aber noch nicht das Gaspedal betätigt, das Fahrzeug entgegen der vom Fahrer vorgegebenen Fahrtrichtung zu Rollen beginnt.

Zur Lösung des Problems ist beispielsweise aus der DE 101 35 744 A1 bekannt, eine auf ein Getriebe des Kraftfahrzeugs einwirkende Bremse zusätzlich zu den Bremsen des Fahrzeugbremssystems zu betätigen. Nachteilig hieran ist, dass zusätzliche mechanische Getriebeelemente benötigt werden.

Das geschilderte Problem kann in beiden möglichen Fahrtrichtungen auftreten. Mit der bekannten mechanischen Rückrollsperre im Getriebe kann jedoch nur eine Rollsperre in eine Rollrichtung realisiert werden.

Der Erfindung liegt die Aufgabe zugrunde, ein softwareimplementiertes Verfahren zur Realisierung einer elektronischen Rollsperre vorzuschlagen, mit der ein Rollen des Fahrzeugs in beide Fahrtrichtungen abgefangen werden kann.

Diese Aufgabe wird dadurch gelöst, dass zunächst die vom Fahrer vorgegebene Fahrtrichtung festgestellt wird, also beispielsweise detektiert wird, ob sich der Schalthebel in der "D"-Position (vorwärts) oder in der "R"-Position (rückwärts) befindet. Weiterhin ist Bestandteil des Verfahrens, dass kontinuierlich, oder diskontinuierlich in diskreten Zeitabständen, überwacht wird, ob das Fahrzeug rollt. Um zu erkennen, ob das Fahrzeug rollt, kann beispielsweise ein Sensor im Antriebsstrang verwendet werden. Für den Fall, dass das Fahrzeug rollt, wird die tatsächliche Rollrichtung festgestellt. Hierzu eignet sich beispielsweise ein drehrichtungserkennender Drehzahlsensor. Die tatsächliche Rollrichtung wird mit der vorgegebenen Fahrtrichtung verglichen. Insbesondere für den Fall, dass die tatsächliche Rollrichtung nicht der vorgegebenen Fahrtrichtung entspricht, wird die Hangabtriebskraft errechnet. Die Hangabtriebskraft wird im Wesentlichen von der Steigung der Fahrbahn und dem Fahrzeuggewicht beeinflusst. Auf Basis der Hangabtriebskraft wird das notwendige Haltedrehmoment errechnet, welches notwendig ist, um die Hangabtriebskraft zu kompensieren. Als weiterer Verfahrensschritt wird steuernd auf die Kupplung eingewirkt und so das zu übertragende Haltedrehmoment an der Kupplung eingestellt. Ein wesentlicher Vorteil des erfindungsgemäßen Verfahrens besteht darin, dass keine zusätzlichen mechanischen Bauteile zur Durchführung des Verfahrens benötigt werden. Die Steuerungs- und Rechenoperationen können im Wesentlichen von der Antriebssteuerung des Kraftfahrzeugs übernommen werden. Ein weiterer wesentlicher Vorteil des erfindungsgemäßen Verfahrens besteht darin, dass mit dem Verfahren eine Fahrzeugrollbewegung, unabhängig von der Bewegungsrichtung, abgefangen werden kann.

Für den Fall, dass das ermittelte Haltedrehmoment einen bestimmten Wert überschreitet, ist mit Vorteil vorgesehen, dass zusätzlich zur Einstellung des zu übertragenden Haltedrehmoments an der Kupplung, ein Drehmoment bei der Motorelektronik, zur Anlage an der Kupplung angefordert wird. Ohne diese Maßnahme besteht die Gefahr, dass der Motor abstirbt, wenn ein entsprechend großes Drehmoment, beispielsweise aufgrund einer großen Fahrbahnsteigerung, an der Kupplung eingestellt wird.

In Ausgestaltung der Erfindung ist mit Vorteil vorgesehen, dass zur Einstellung des Haltedrehmoments an der Kupplung eine Ventileinrichtung angesteuert und betätigt wird, wodurch ein Druck in einem Druckmedium eingestellt wird und wobei das Druckmedium auf ein Kupplungskolben wirkt. Der Kupplungskolben wirkt in Abhängigkeit des Druckes des Druckmediums auf eine Kupplungseinrichtung, beispielsweise ein Lamellenpaket oder eine Einscheibentrockenkupplung. Je größer der Druck im Druckmedium ist, desto stärker werden die Lamellen des Lamellenpaketes aneinandergepresst und um so größer ist das von der Kupplungseinrichtung übertragene Drehmoment zur Kompensierung der Rollbewegung entgegen der vorgegebenen Fahrtrichtung.

Gemäß einer weiteren Ausgestaltungsform der Erfindung ist vorgesehen, dass zur Einstellung des Haltedrehmoments an der Kupplung ein Elektromotor mit einer Ausrückeinrichtung angesteuert und betätigt wird. Durch Betätigung des Elektromotors wird die Ausrückposition der Ausrückeinrichtung verändert. Hieraus resultiert eine Betätigungskraft auf eine Druckplatte, die diese auf eine Kupplungseinrichtung, beispielsweise eine Einscheibentrockenkupplung, überträgt.

Es ist weiterhin denkbar, dass zur Einstellung des Haltedrehmoments an der Kupplung ein Elektromotor mit hydraulischem Geberzylinder angesteuert und betätigt wird, wodurch ein hydraulischer Druck in einem Druckmedium erzeugt wird, der auf eine Ausrückeinrichtung wirkt, wodurch eine Ausrückposition der Ausrückeinrichtung verändert wird. Die hieraus resultierende Kraft wird wiederum von einer Druckplatte auf eine Kupplungseinrichtung übertragen.

In Ausgestaltung des Verfahrens ist mit Vorteil vorgesehen, dass zur Berechnung der Hangabtriebskraft die Fahrzeugbeschleunigung ermittelt wird. Die Fahrzeugbeschleunigung ist die Änderung der Fahrzeuggeschwindigkeit in einem bestimmten Zeitintervall.

Weiterhin ist mit Vorteil vorgesehen, dass in die Berechnung des notwendigen Haltedrehmoments das Fahrzeuggewicht einfließt, wobei ein besonders genauer Wert erhalten wird, wenn das tatsächliche Fahrzeuggewicht bei der Elektronik eines Fahrzeugbauteils abgefragt wird. Selbstverständlich ist es jedoch möglich, mit einer Konstante oder einem vom Fahrer vorzugebenden Wert zu rechnen.

Üblicherweise wird das erfindungsgemäße softwareimplementierte Verfahren nur in Anfahrsituationen des Fahrzeugs aktiviert. Da dem ersten Vorwärtsgang und dem Rückwärtsgang häufig ein unterschiedliches Übersetzungsverhältnis zugrunde liegt, ist mit Vorteil vorgesehen, dass die gewählte Getriebeübersetzung zur Berechnung des notwendigen Haltedrehmoments abgefragt wird.

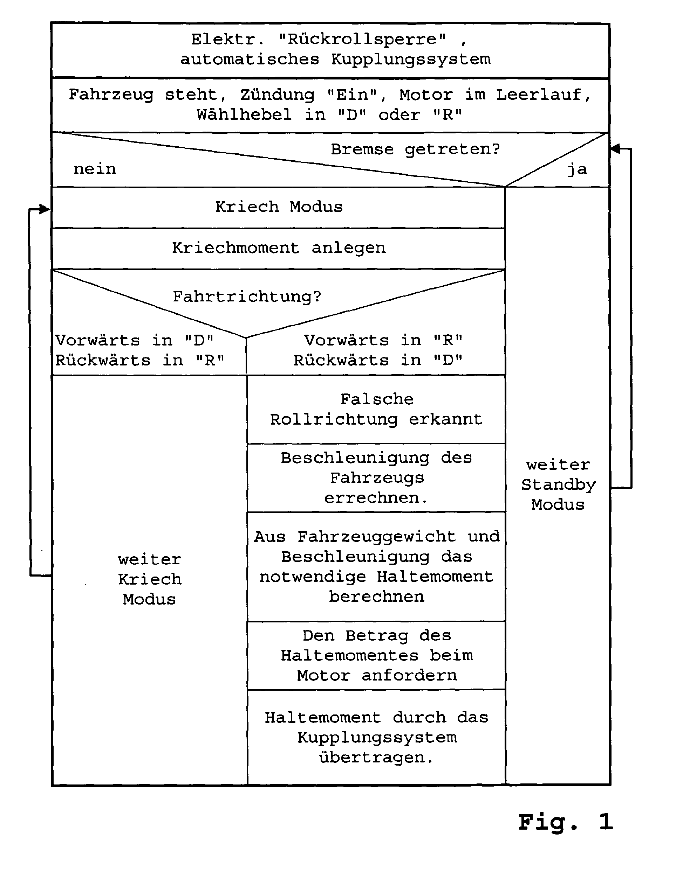

Anhand der Zeichnung, die einen Verfahrensablauf darstellt, wird die Erfindung näher erläutert.

Die einzige Figur zeigt einen vereinfachten Verfahrensablaufplan.

Das erfindungsgemäße Verfahren wird vorzugsweise beim Anfahren des Kraftfahrzeugs aktiviert. Zunächst wird überprüft, ob die Kraftfahrzeugbremse getreten ist. Falls dies nicht der Fall ist, wird der Kriechmodus aktiviert und ein Kriechmoment von beispielsweise 15 Newtonmeter an die Kupplung angelegt. Daraufhin wird die vorgegebene Fahrtrichtung festgestellt und in diskreten Zeitabständen überwacht, ob das Fahrzeug rollt. Für den Fall, dass das Fahrzeug rollt, wird die tatsächliche Rollrichtung festgestellt. Die tatsächliche Rollrichtung wird mit der vorgegebenen Fahrtrichtung verglichen. Falls die tatsächliche Rollrichtung mit der vorgegebenen Fahrtrichtung übereinstimmt, verbleibt das Fahrzeug im Kriechmodus. Ist dem nicht so, wird die Beschleunigung des Fahrzeugs ermittelt. Mit Hilfe der Fahrzeugbeschleunigung und des Fahrzeuggewichts wird eine Hangabtriebskraft ermittelt, auf Basis derer das Haltemoment unter Berücksichtigung des Getriebeübersetzungsverhältnisses ermittelt wird. Das notwendige Drehmoment wird einerseits bei der Motorelektronik angefordert und zugleich wird das zu übertragende Haltedrehmoment, beispielsweise über einen Kupplungskolben, an der Kupplung eingestellt. Hierdurch kann die Rollbewegung entgegen der vorgegebenen Fahrtrichtung ohne den Einsatz zusätzlicher mechanischer Bauteile kompensiert werden.

## Patentansprüche

1. Softwareimplementiertes Verfahren zur Realisierung einer elektronischen Rollsperre für Kraftfahrzeuge mit automatischer oder automatisierter Kupplung,
**dadurch gekennzeichnet, dass**
• die vorgegebene Fahrtrichtung festgestellt wird,
• kontinuierlich, oder diskontinuierlich in diskreten Zeitabständen, überwacht wird, ob das Fahrzeug rollt,
• für den Fall, dass das Fahrzeug rollt, die tatsächliche Rollrichtung festgestellt wird,
• die tatsächliche Rollrichtung mit der vorgegebenen Fahrtrichtung verglichen wird,
• falls die tatsächliche Rollrichtung nicht der vorgegebenen Fahrtrichtung entspricht, die Hangabtriebskraft errechnet wird,
• das notwendige Haltedrehmoment in Abhängigkeit der Hangabtriebskraft errechnet wird,
• an der Kupplung das zu übertragende Haltedrehmoment eingestellt wird.

2. Verfahren nach Anspruch 1,
**dadurch gekennzeichnet, dass** bei Bedarf, zusätzlich zur Einstellung des zu übertragenden Haltedrehmoments an der Kupplung, ein Drehmoment bei der Motorelektronik, zur Anlage an die Kupplung, angefordert wird.

3. Verfahren nach einem der vorhergehenden Ansprüche ,
**dadurch gekennzeichnet, dass** zur Einstellung des Haltedrehmoments an der Kupplung eine Ventileinrichtung angesteuert und betätigt wird, wodurch ein Druck in einem Druckmedium eingestellt wird und wobei dass Druckmedium auf einen Kupplungskolben wirkt, und der Kupplungskolben eine von dem Druck des Druckmedium abhängige Kraft auf eine Kupplungseinrichtung, insbesondere ein Lamellenpaket, überträgt.

4. Verfahren nach einem der Ansprüche 1 oder 2,
**dadurch gekennzeichnet, dass** zur Einstellung des Haltedrehmoments an der Kupplung ein Elektromotor mit einer Ausrückeinrichtung angesteuert und betätigt wird, wodurch eine Ausrückposition der Ausrückeinrichtung verändert wird, wodurch wiederum eine Druckplatte eine aus der Ausrückposition resultierende Kraft auf eine Kupplungseinrichtung, insbesondere eine Einscheibentrockenkupplung, überträgt.

5. Verfahren nach einem der Ansprüche 1 oder 2,
**dadurch gekennzeichnet, dass** zur Einstellung des Haltedrehmoments an der Kupplung ein Elektromotor mit hydraulischem Geberzylinder angesteuert und betätigt wird, wodurch ein hydraulischer Druck in einem Druckmedium erzeugt wird, der auf eine Ausrückeinrichtung wirkt, wodurch eine Ausrückposition der Ausrückeinrichtung verändert wird, wodurch wiederum eine Druckplatte eine aus der Ausrückposition resultierende Kraft auf eine Kupplungseinrichtung überträgt.

6. Verfahren nach einem der vorhergehenden Ansprüche,
**dadurch gekennzeichnet, dass** zur Berechnung der Hangabtriebskraft die Fahrzeugbeschleunigung ermittelt wird.

7. Verfahren nach einem der vorhergehenden Ansprüche ,
**dadurch gekennzeichnet, dass** in die Berechnung des notwendigen Haltedrehmoments das Fahrzeuggewicht einfließt.

8. Verfahren nach Anspruch 5,
**dadurch gekennzeichnet, dass** das tatsächliche Fahrzeuggewicht bei einer Elektronik eines Kraftfahrzeugbauteils, beispielsweise den Stoßdämpfern, abgefragt wird.

9. Verfahren nach einem der vorhergehenden Ansprüche,
**dadurch gekennzeichnet, dass** die gewählte Getriebeübersetzung abgefragt wird und in die Berechnung des notwendigen Haltedrehmoments mit einfließt.
